# EUROPEAN PATENT SPECIFICATION

(11) **EP 0 597 108 B1**
(45) Date of publication and mention of the grant of the patent: **10.06.1998**
(21) Application number: 93900424.8
(22) Date of filing: 18.12.1992
(51) Int. Cl.: B29C 45/56, B29C 45/57

(54) **LOCALIZED PRESSURIZING TYPE INJECTION MOLDING MACHINE**
LOKAL DRUCKGEBENDE SPRITZGIESSMASCHINE
MACHINE DE MOULAGE PAR INJECTION A SURPRESSION LOCALISEE

(30) Priority: 02.06.1992 JP 141376/92
(43) Date of publication of application: 18.05.1994
(73) Proprietor: SUMITOMO HEAVY INDUSTRIES, LTD, Tokyo 100 (JP)
(72) Inventor: MORIKITA, Nobuo, Yotsukaido-shi, Chiba 284 (JP)
(74) Representative: Boeters, Hans Dietrich, Dr.
(86) International application number: JP9201667
(87) International publication number: WO9324298

(56) References cited:
- EP-A- 0 596 270
- DE-A- 3 135 258
- DE-A- 4 105 687
- JP-A- 2 026 723
- JP-A- 2 089 615
- JP-A-48 026 844
- JP-A-48 026 845
- JP-A-58 012 741
- JP-A-61 083 016
- JP-A-63 022 620
- JP-A-63 212 057
- PATENT ABSTRACTS OF JAPAN vol. 13, no. 100 (M-805) 9 March 1989 & JP-A-63 288 724 (SONODA YUBUN) 25 November 1988

## Description

### TECHNICAL FIELED

The present invention relates to a locally pressurizing type injection molding machine. A molding machine according to the preamble of claim 1 is disclosed in DE-A-4105687.

### BACKGROUND ART

There are conventionally provided locally pressurizing type injection molding machines in which various workings are applied to a molded product by pressurizing a local portion of a resin within a mold, thereby eliminating the need for the boring of a thin plate, the finishing of a cut surface and the like after molding.

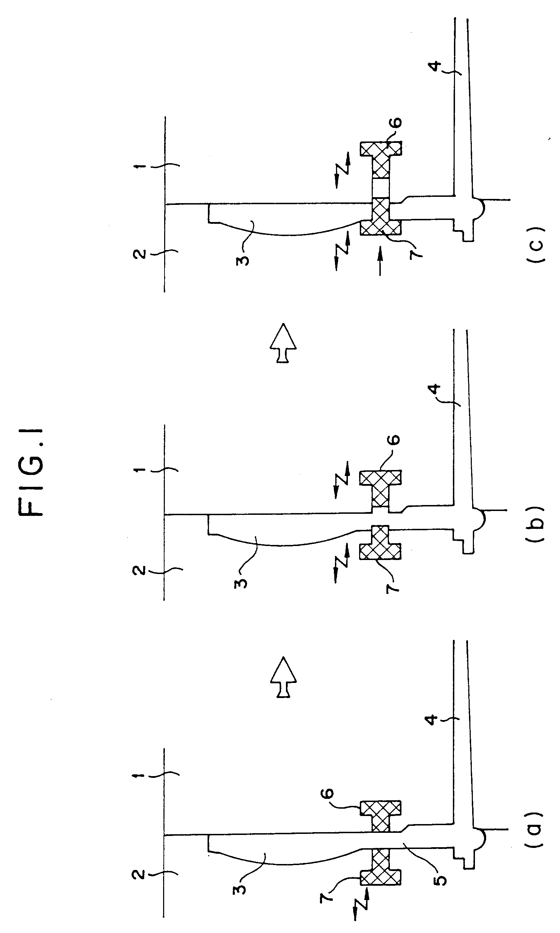

Fig. 1 is a view illustrating an essential portion of the prior art locally pressurizing type injection molding machine. A portion (a) of Fig. 1 illustrates a molding state; a portion (b) of Fig 1 illustrates a punch pressurizing state; and a portion (c) of Fig. 1 illustrates a vibration punching state.

Referring to Fig. 1, the prior art locally pressurizing type injection molding machine comprises a stationary die 1 mounted to stationary platen which is not shown, a movable die 2 mounted to a movable platen which is not shown, a cavity 3 defined between the stationary die 1 and the movable die 2, a sprue 4 to which a resin injected from an injection nozzle which is not shown is fed, a gate 5 defined between the sprue 4 and the cavity 3, a stationary punch 6 disposed on the stationary die 1, and a movable punch 7 disposed on the movable die 2.

The stationary punch 6 and the movable punch 7 are vibrated by vibrating devices (which are not shown) disposed within the movable die 2 during a cooling step after completion of a pressure maintaining step in an injection molding cycle. The stationary and movable punches 6 and 7 are previously disposed at locations corresponding to local portions, i.e., working or processing sections such as a boring portion and a gate 5 and hence, as shown in (a) of Fig. 1, the resin at the working or processing sections clamped by the stationary and movable dies 6 and 7 is vibrated by vibration of the movable punch 7, so that it is softened by a heat generated due to a shearing stress.

For example, if the movable punch 7 is pushed in one direction, as shown in (b) of Fig. 1, while vibrating the resin as it is, the softened resin is cut, as shown in (c) of Fig. 1. In this case, the resin portion cut along the movable punch 7 can be finished and cooled by the vibration of the movable punch 7 to provide a worked or processed surface which is glossy and is of a high accuracy.

In the above-described prior art locally pressurising type injection molding machine, however, a pressurizing device is disposed within the movable die 2, so that the stationary and movable punches 6 and 7 are vibrated by the vibrating device, resulting in a complicated structure and an increased cost.

Because the stationary and movable punches 6 and 7 are vibrated during the cooling step after the completion of the pressure maintaining step to cut the resin, the period of the injection molding cycle is prolonged.

It is an object of the present invention to provide a locally pressurizing type injection molding machine, wherein the problems associated with the above-described prior art locally pressurizing type injection molding machine are overcome, and various workings or processings can be applied to a molded product during a pressure maintaining step, thereby eliminating the need for workings or processings after the molding and shortening the period of the injection molding cycle, leading to a reduced cost.

### DISCLOSURE OF THE INVENTION

To achieve the above object, a locally pressurizing type injection molding machine according to claim 1 is provided.

Thus, after completion of an injection step, the increasing pulse-like hydraulic pressure is supplied to the pressurizing cylinder at a pressure maintaining step or a cooling step, so that the pressurizing pin can be vibrated to apply a pulse-like pressurizing force to the resin, thereby applying a predetermined working or processing to a molded product.

When a gate-cutting is conducted after charging of the resin into the cavity, the pressure on the resin within the cavity can be maintained intact and for this reason, the pressure maintaining step is not required. Therefore, it is possible to immediately start a metering step after the gate cutting.

Further, the cavity can have a dummy portion separated away from the molded product by advancement of the pressurizing pin. For this reason, the pressurizing pin enables the resin within the dummy portion to be pushed into a mechanical limit position, and also enables the resin in the working or processing portion to be vibrated.

Thus, a worked or processed surface of a high accuracy can be provided.

Moreover, because the molten resin after charged into the cavity is vibrated, the period of the injection molding cycle can be shortened.

### BRIEF DESCRIPTION OF THE DRAWINGS

Fig. 1 is a view illustrating an essential portion of a prior art locally pressurizing type injection molding machine;
Fig. 2 is a sectional view of a locally pressurizing type injection molding machine according to a first embodiment of the present invention;
Fig. 3 is a graph illustrating characteristics of a return spring mounted in the locally pressurizing type injection molding machine according to the first embodiment of the present invention;
Fig. 4 is a graph illustrating the relationship between the pressurizing force on a resin within a cavity, the amount of resin compressed and the pressure determined by a proportional reduction valve;
Fig. 5 is a diagram illustrating the relationship between the determined pressure and the displacement;
Fig. 6 is a diagram illustrating a gate cutting and a post-treatment by the locally pressurizing type injection molding machine according to the first embodiment of the present invention;
Fig. 7 is a diagram illustrating the boring or perforation of a pin hole by the locally pressurizing type injection molding machine according to the first embodiment of the present invention;
Fig. 8 is a sectional view of a locally pressurizing type injection molding machine according to a second embodiment of the present invention;
Fig. 9 is a view of the locally pressurizing type injection molding machine according to the second embodiment of the present invention shown in a state in which the charging and pressurization of a resin have been completed;
Fig. 10 is a view of the locally pressurizing type injection molding machine according to the second embodiment of the present invention shown in a state in which the die opening and the ejection of a molded product have been completed;
Fig. 11 is a diagram illustrating a pressurizing program for a pressurizing pin;
Fig. 12 is a sectional view of a locally pressurizing type injection molding machine according to a third embodiment of the present invention; and
Fig. 13 is a view of the locally pressurizing type injection molding machine according to the third embodiment of the present invention shown in a state in which the charging and pressurization of a resin have been completed.

### BEST MODE FOR CARRYING THE INVENTION

The best mode for carrying the present invention will now be described in detail with reference to the accompanying drawings.

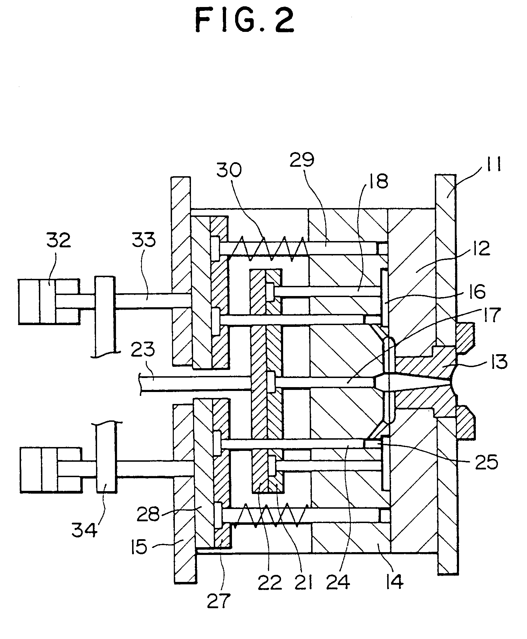

Referring to Fig. 2, a locally pressurizing type injection molding machine according to a first embodiment of the present invention is shown in a sectional view.

This locally pressurizing type injection molding machine includes a stationary mounting plate 11, and a stationary die 12 mounted to a stationary platen which is not shown, with the stationary mounting plate 11 interposed therebetween. At an injection step, an injection nozzle of an injecting device which is not shown is advanced, so that a tip end thereof is brought into contact with a sprue bush 13 of the stationary die 12.

On the other hand, a movable die which is not shown is adapted to be advanced and retreated (moved laterally as viewed in Fig. 2) by a die closing device which is not shown, thereby bringing a movable die 14 into and out of contact with the stationary die 12. To this end, the movable die 14 is mounted to the movable platen with a movable mounting plate 15 and a spacer block (not shown) interposed therebetween.

Thus, a resin injected from the injection nozzle is passed through a sprue, a runner and a gate 25 and charged into a cavity 16 defined between the stationary and movable dies 12 and 14.

The completion of the injection step is followed by a pressure maintaining step, at which the pressure on the resin within the cavity 16 is increased, and the cooling of the resin is started. After a lapse of a given time, the dies 12 and 14 are opened with a molded product (not shown) left on the movable die 14, and the molded product is ejected down by an ejector device.

For this purpose, a sprue lock pin 17 and an ejector pin 18 are provided. The sprue lock pin 17 is mounted in an opposed relation to the sprue for retaining the molded product to leave it on the movable die 14 during opening of the dies. The ejector pin 18 is disposed with it tip end facing the cavity 16, the runner and the like for ejecting down the molded product from the movable die 14 after opening of the dies.

The sprue lock pin 17 and the ejector pin 18 extend rearwardly (toward a die-clamping device) through the movable die 14, with their head portions being clamped and fixed by ejector plates 21 and 22. A rod 23 is movable into abutment against the ejector plates 21 and 22, and as the rod is advanced, the sprue lock pin 17 and the ejector pin 18 are advanced.

A pressurizing pin 24 is provided for applying a working or processing to the molded product during the pressure maintaining step. A required number of the pressurizing pin 24 are disposed with their tip ends facing predetermined portions of the cavity 16, the gate 25 and the like to extend rearwardly through the movable die 14 and the ejector plates 21 and 22, with their head portions formed at rear ends being clamped and fixed by pressurizing plates 27 and 28.

The pressurizing plates 27 and 28 are disposed for movement into and out of contact with the movable mounting plate 15, and advanced and retreated by two pressurizing cylinders 32. The pressurizing cylinder 32 has a pressurizing rod 33 which extends through a cross head 34 and the movable mounting plate 15 into abutment against the pressurizing plate 28, so that the pressurizing pins 24 can be pushed out by operation of the pressurizing cylinder 32.

The hydraulic pressure supplied to the pressurizing cylinder 32 is controlled by a proportional reduction valve or a servo valve which is not shown. By controlling the proportional reduction valve or the servo valve, the pressurizing pins 24 can be gradually advanced while being vibrated to apply a pulse-like pressurizing force to the resin at the molded product processing section, thereby vibrating (displacing) the resin to apply a predetermined working or processing to the molded product.

It should be noted that even if the pressurizing pins 24 are advanced using the proportional reduction valve or the servo valve, the resin cannot be vibrated. In order to vibrate the resin by a pressurizing force, a reaction force is required, and the pressurizing pins 24 must be forcedly retreated.

To this end, a return spring 30 of a high responsiveness is mounted over each of four return pins 29 to surround such return pin 29 and disposed between the pressurizing plate 27 and the movable die 14. Each of the pressurizing pin 24 and the return pin 29 has a head portion formed at its end and clamped and fixed by the pressurizing plates 27 and 28. The uniform disposition of the four return springs 30 ensures that the pressurizing plate 27 and 28 can be advanced in parallel to each other without being inclined, leading to a smooth motion.

The spring constant of the return spring 30 is set at a predetermined value, thereby ensuring that the resin can be vibrated to near 10 Hz by the hydraulic pressure generated by the proportional reduction valve. More specifically, because the pulse-like pressurizing force is generated by the proportional reduction valve, a return spring 30 having a spring constant enough to follow this is selected. The spring constant is proportional to the weight of the driving sections (e.g., the pressurizing plates 27 and 28, the pressurizing rod 33 and the cross head 34) and the pressurizing frequency of a pulse input. In other words, when the pressurizing frequency is increased, or the weight of the driving sections is increased, the spring constant must be increased.

For example, if the weight of the driving sections is about 18.5 kg and the pressurizing frequency is 10 Hz. the spring constant is 80 Kg f/mm. When the four return springs 30 are provided, the spring constant of each return spring is 200 Kg f/cm. The preload of the return spring 30 may be set to be about 10 % of the maximum pressurizing force (880 Kg f), e.g., 80 kg f. The preload is provided for the purpose of improving the controlability of the proportional reduction valve.

The characteristic of the return spring 30 having the above-described feature will be described below.

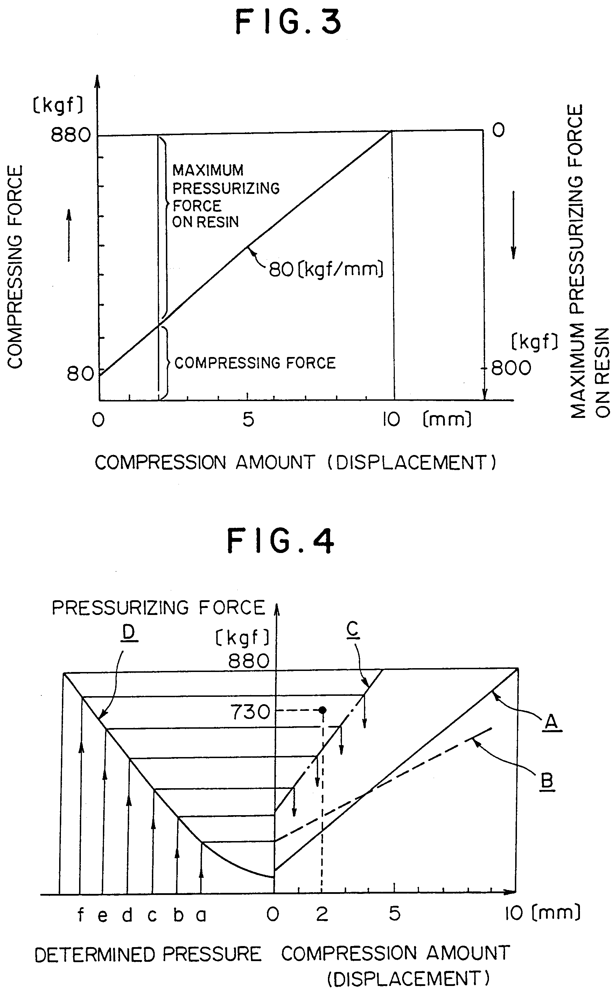

Fig. 3 is a characteristic diagram of the return spring mounted in the locally pressurizing type injection molding machine according to the first embodiment of the present invention.

In the locally pressurizing type injection molding machine according to the present invention, the maximum pressurizing force (hydraulic pressure 150 Kg f/cm²) is 880 Kg f. Therefore, the maximum compression amount (displacement) of the return spring 30 is as follows:
(880 - 80) / 80 = 10 [mm]
The maximum pressurizing force effectively applied to the resin is gradually decreased, as the compression amount is increased, and thus, it is zero (0), when the compression amount is 10 mm.

Fig. 4 is a diagram illustrating the relationship between the pressurizing force on the resin within the cavity, the compression amount and the pressure determined by the proportional reduction valve.

As shown in a right half of Fig. 4, the total load characteristic C provided by the return spring 30 (Fig. 2) and the resin after completion of the injection step is given by the sum (A + B) of the spring characteristic A and the pressurizing/displacing characteristic B. The spring characteristic A indicates the relationship between the force applied to the pressurizing plates 27 and 28 and the compression amount of the return spring 30, and the pressurizing/displacing characteristic B indicates the relationship between the pressurizing force on the resin and the displacement.

As shown in a left half of Fig. 4, the relationship between the pressure determined by the proportional reduction valve (not shown) and the actual pressurizing force is indicated by a pressurizing characteristic D. When the pulse-like pressurizing force is determined by the determined pressures a to f, the resin at the processing section is vibrated with a displacement as given by the total load characteristic C. When the determined pressure is of a value represented by a or b, it is smaller than the preload of the return spring 30 and a force applying an intial displacement to the resin and hence, does not lie on a line of the total load characteristic C, and the displacement of the resin is zero (0).

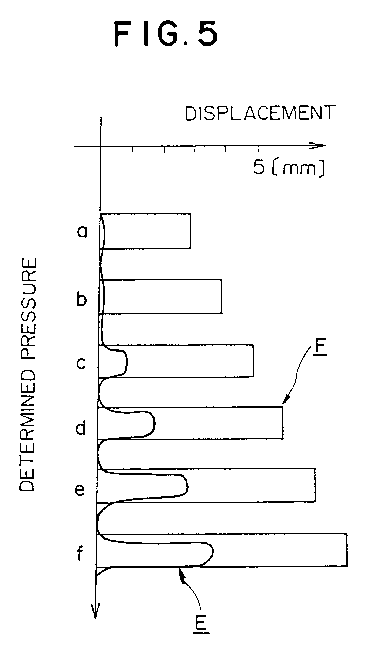

Fig. 5 is a diagram illustrating the relationship between the determined pressure and displacement.

As shown in Fig. 5, if the pressure determined by the proportional reduction valve is stepwise increased as shown by a to f, a pulse-like pressurizing force as indicated by F is applied to the resin, thereby causing the resin to be displaced, as indicated by E. A program established for the pulse-like pressurizing force enables the pulse-like pressurizing force to be set at any value for a period of from the start of the injection step via the pressure maintaining step and the cooling step to the opening of the dies. In a region of lower pressure determined by the proportional reduction valve, the linearity is slightly injured.

In the locally pressurizing type injection molding machine having the above-described construction, various processings can be applied to the molded product by applying the pressurizing force to the resin by the pressurizing pins 24 (Fig. 2) during the injection step or the pressure maintaining step..

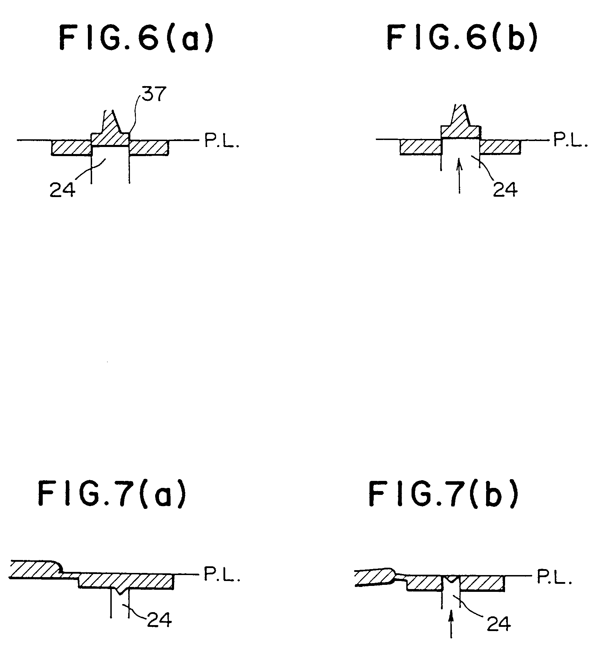

Fig. 6 is a diagram illustrating the gate-cutting/post-treating process in the locally pressurizing type injection molding machine according to the first embodiment of the present invention, and Fig. 7 is a diagram illustrating the pin hole perforating process in the locally pressurizing type injection molding machine according to the first embodiment of the present invention. A portion (a) of each of Figs. 6 and 7 corresponds to the state before the process, and a portion (b) corresponds to the state after the process. Reference character P.L. designates a parting line.

In Fig. 6, a disk gate 37 is gate-cut by the pressurizing pins 24.

In Fig. 7, immediately after switching-over of a speed control at the injection step to a pressure control at the pressure maintaining step, the pressurizing pins 24 are operated to perforate pin holes in the molded product. In this case, a final punching is performed by the post-processing.

A second embodiment of the present invention will be described below.

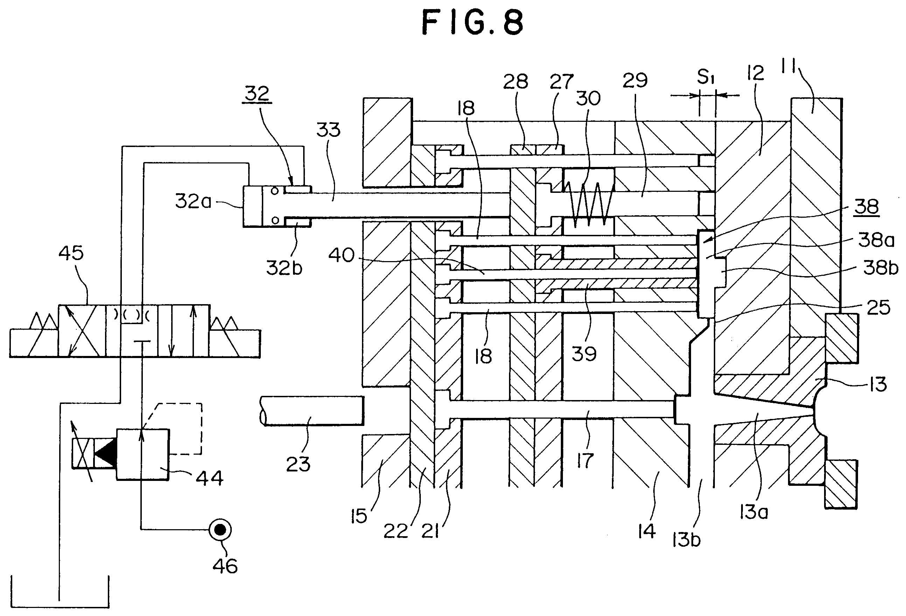

Fig. 8 is a sectional view of a locally pressurizing type injection molding machine according to the second embodiment of the present invention.

As shown in Fig. 8, the locally pressurizing type injection molding machine includes a stationary mounting plate 11, and a stationary die 12 mounted to a stationary platen (not shown) with the stationary mounting plate 11 interposed therebetween. An injection nozzle of an injecting device which is not shown is advanced at an injection step, so that a tip end of the injection nozzle is brought into contact with a sprue bush 13 of the stationary die 12.

On the other hand, a movable platen which is not shown is advanced and retreated by a die-clamping device which is not shown, so that a movable die 14 is brought into and out of contact with the stationary die 12. To this end, the movable die 14 is mounted to the movable platen with a movable mounting plate 15 and a spacer block (not shown) interposed therebetween.

Thus, a resin injected from the injection nozzle is passed through a sprue 13a and a runner 13b via a gate 25 into a cavity 38 defined between the stationary and movable dies 12 and 14.

The completion of the injection step is followed by a pressure maintaining step, at which the pressure on the resin within the cavity 38 is increased, and the cooling of the resin is started. After a lapse of a predetermined time, the dies 12 and 14 are opened with a molded product (not shown) left on the movable die 14, and the molded product is ejected down by an ejector device.

To this end, a sprue lock pin 17 and an ejector pin 18 are provided. The sprue lock pin 17 is mounted in an opposed relation to the sprue 13a so as to retain the molded product to leave it on the movable die 14 during opening of the dies. The ejector pin 18 is disposed with its tip end facing the cavity 38, the runner 13b and the like to eject down the molded product from the movable die after opening of the dies.

Head portions formed respectively at rear ends of the sprue lock pin 17 and the ejector pin 18 are clamped and fixed by ejector plates 21 and 22. A rod 23 is movable into abutment against the ejector plates 21 and 22, and as the rod 23 is advanced, the sprue lock pin 17 and the ejector pin 18 are advanced.

For applying a processing to the molded product during the pressure maintaining step, a pressurizing pin 39 is provided, and an ejector pin 40 is mounted to extend through the pressurizing pin 39. Tip ends of the pressurizing pin 39 and the ejector pin 40 are located to face a molded product processing section, e.g., a perforating section 38a. A head portions formed at a rear end of the pressurizing pin 39 is clamped and fixed by pressurizing plates 27 and 28, and a head portions formed at a rear end of the ejector pin 40 is clamped and fixed by the ejector plates 21 and 22.

The range of movement of the pressurizing plates 27 and 28 is restrained by a support member which is not shown, so that they cannot be moved rearwardly (i.e., toward the die-clamping device) from positions shown in Fig. 8.

The cavity 38 has a dummy portion 38b provided therein at a location corresponding to the molded product perforating section 38a. The dummy portion 38b is defined in the stationary die 12 into a shape corresponding to the pressurizing pin 39 and comprised of a recess having a diameter larger than that of the pressurizing pin 39 by about 0.01 to 0.1 mm. Thus, when the pressurizing pin 39 is advanced until its tip end enters the dummy portion 38b, the dummy portion 38b is separated from the molded product with the aid of the pressurizing pin 39.

The ejector pin 40 is pushed out during opening of the dies to eject down the solidified resin in the dummy portion 38b.

The pressurizing plates 27 and 28 are advanced by two pressurizing cylinders 32 (only one is shown in Fig. 8). The pressurizing cylinder 32 has a pressurizing rod 33 which can be moved through the movable mounting plate 15 and the ejector plates 21 and 22, until it can be connected to the pressurizing plate 28, so that the pressurizing pin 39 can be pushed out through an advance stroke S₁ by operation of the pressurizing cylinder 32.

To this end, a proportional reduction valve 44 and a directional control valve 45 are provided, so that a pulse-like hydraulic pressure can be supplied to an oil chamber 32a in the pressurizing cylinder 32 by electrically controlling an oil discharged from a pump 46 by the proportional reduction valve 44 and the directional control valve 45. Then, the pulse-like hydraulic pressure causes the pressurizing pin 39 to be gradually advanced while being vibrated to vibrate the resin at the molded product processing section, thereby applying a predetermined processing to a molded product. It should be noted that the oil chamber 32b in the pressurizing cylinder 32 is intended to retreat the pressurizing rod 33 to its initial position.

Since the dummy portion 38b of the shape corresponding to the pressurizing pin 39 is defined in the perforating section 38a of the cavity 38, the pressurizing pin 39 can be pushed into a mechanical limit position within the dummy portion 38b. At this time, a hole having the same shape as the profile of the pressurizing pin 39 is made in the molded product. Moreover, the pressurizing pin 39 causes the resin in the dummy portion 38b to be pushed into the mechanical limit position, so that the resin at the processing section can be sufficiently vibrated, thereby providing a processed surface of a high accuracy.

Each of the proportional reduction valve 44 and the directional control valve 45 is of a construction such that the hydraulic pressure is supplied only in a direction of advancement of the pressurizing pin 39. Therefore, it is necessary to retreat the pressurizing pin 39 in order to vibrate the resin. For this purpose, a return spring 30 of a high responsiveness is fitted over each of four return springs (only one is shown in Fig. 8) and disposed between the pressurizing plate 27 and the movable die 14.

Thus, the pressurizing cylinder 32 generates a pressurizing force only the advancing direction, and the return spring 30 generates a reaction force only in a retreating direction to urge the pressurizing plates 27 and 28, so that a balance of these forces causes a vibration of several hertz to 10 hertz for the pressurizing pin 39.

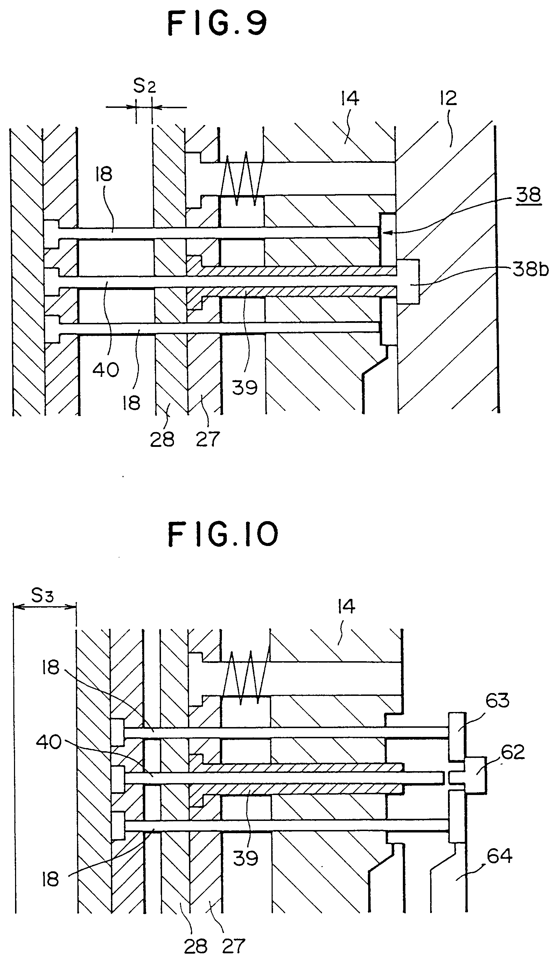

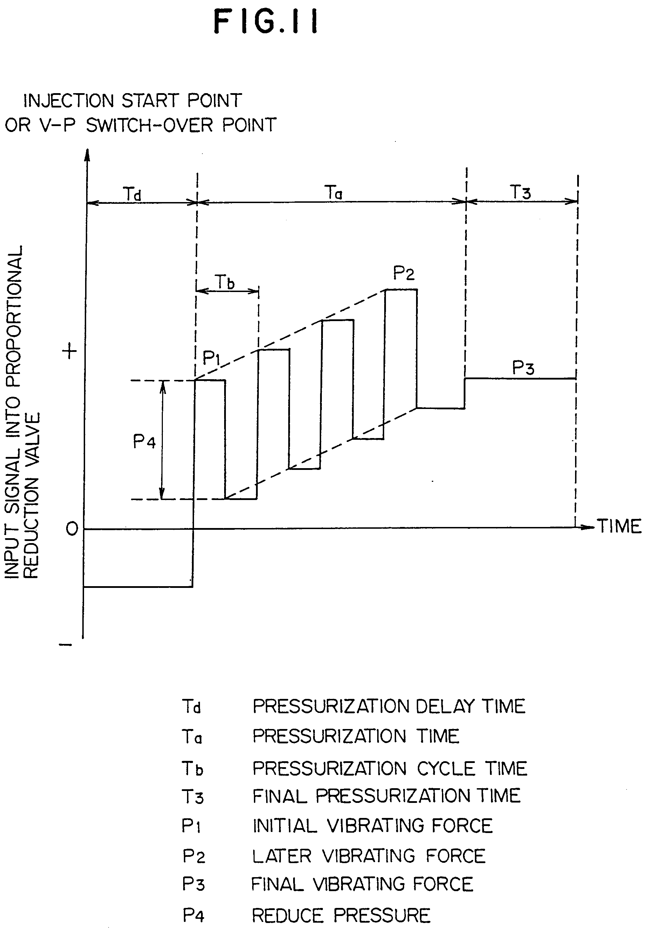

Fig. 9 is a view of the locally pressurizing type injection molding machine according to the second embodiment of the present invention in a state in which the charging and pressurization have been completed; Fig. 10 is a view of the locally pressurizing type injection molding machine according to the second embodiment of present invention in a state in which the opening of the dies and the ejection of the molded product have been completed, and Fig. 11 is a diagram illustrating a pressurizing program for the pressurizing pin.

In Figs. 9 and 10, reference numerals 12, 14, 18, 27, 28, 38 and 39 have been described above, and reference numeral 40 is an ejector pin; reference numeral 62 is a resin piece; reference numeral 63 is a molded product; reference numeral 64 is a product runner; reference character S₂ is a pressurization stroke; and reference character S₃ is an ejection stroke.

In Fig. 11, the axis of abscissas indicates the time, and the axis of ordinates indicates the input signal into the proportional reduction valve 44 (Fig. 8), and T_{d} is a pressurization delay time; Tₐ is a pressurization time; T_{b} is a pressurization cycle time; T₃ is a final pressurization time; P₁ is an initial pressurizing force; P₂ is a later pressurizing force; P₃ is a final pressurizing force; and P₄ is a reduced pressure.

When the charging of the resin into the cavity 38 is started, the pressurizing pin 39 is in a position shown in Fig. 8. The start of the pressurization can be set at any time point within a period of from a molten state of the resin to a state of the resin having a temperature equal to or more than a thermally deforming temperature, and for example, is set at a point after a lapse of the pressurization delay time T _{d} from the start point of injection or the V-P switch-over point (the timing at which the resin is filled up in the cavity 38 after the start of the charging).

The pressurization is continued for the pressurization time Tₐ , while the set value of pressurizing force is increased and decreased as shown in Fig. 11. In this case, the pressurizing force is gradually increased from the initial pressurizing force P₁ to the later pressurizing force P₂, and at the final stage, the final pressurizing force P₃ is maintained for the final pressurization time T₃ without vibration of the pressurizing pin 39.

The positions of the pressurizing plates 27 and 28 and the pressurizing pin 39 at this time are dependent upon the pressurizing force and the reaction force, and if the pressurizing force is increased or decreased, the pressurizing pin 39 is advanced or retreated. According to the pressurizing program shown in Fig. 11, the pressurizing pin 39 is gradually advanced while being reciprocated relative to the resin within the cavity 38, thereby pushing the resin into the dummy portion 38b to the mechanical limit position.

The command to the proportional reduction valve 44 can be determined freely by the pressurizing program in Fig. 11, and the command from the initial pressurizing force P₁ to the later pressurizing force P₂ is calculated automatically.

Upon the completion of the pressurization, the pressurizing pin 39 is located at a position shown in Fig. 9, and at this time, the processing of the molded product 63 is completed.

Subsequently, the opening of the dies is carried out, wherein an undercut is applied so that the resin piece 62 solidified in the dummy portion 38b is left on the movable die 14. Then, the pressurizing pin 39 is located at a position shown in Fig. 10, and the ejector pin 18 is pushed to eject down the molded product 63 and the product runner 64. During this time, the ejector pin 40 is also pushed to eject down the resin piece 62.

A third embodiment of the present invention will be described below.

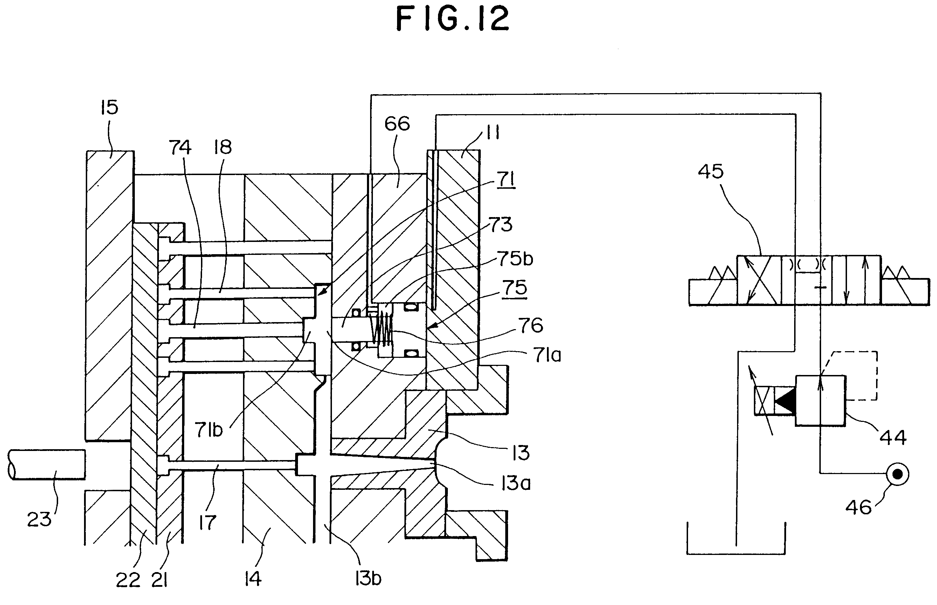

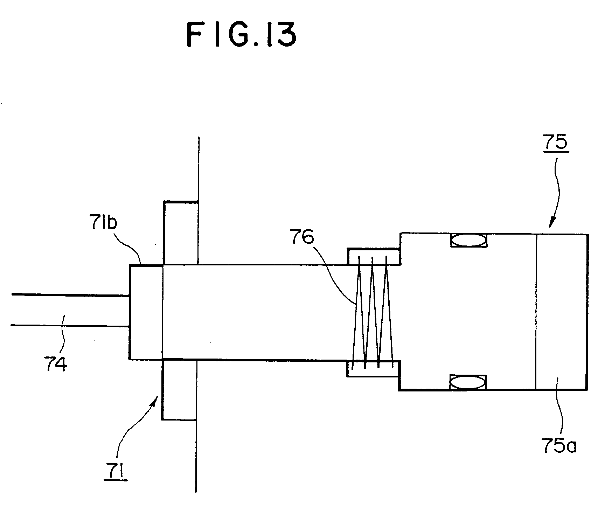

Fig. 12 is a sectional view of a locally pressurizing type injection molding machine according to the third embodiment of the present invention, and Fig. 13 is a view of the locally pressurizing type injection molding machine according to the third embodiment of the present invention, which is in a state after completion of the charging and pressurization.

Referring to Figs. 12 and 13, the locally pressurizing type injection molding machine includes a stationary mounting plate 11, and a stationary die 66 mounted to a stationary platen which is not shown, with the stationary mounting plate 11 interposed therebetween. An injection nozzle of an injecting device, which is not shown, is advanced at an injection step, so that a tip end of the injection nozzle is brought into contact with a sprue bush 13 of the stationary die 66.

On the other hand, a movable platen, which is not shown, is advanced and retreated (moved laterally as viewed in Fig. 12) to bring a movable die 14 into and out of contact with the stationary die 66. To this end, the movable die 14 is mounted to a movable platen with the movable mounting plate 15 and a spacer block (not shown) interposed therebetween.

Thus, a resin injected from the injection nozzle is passed through a sprue 13a and a runner 13b via a gate 25 and charged into a cavity 71 defined between the stationary and movable dies 66 and 14.

The completion of the injection step is followed by a pressure maintaining step, where the pressure on the resin within the cavity 71 is increased, and the cooling of the resin is started. After a lapse of a given time, both the dies 14 and 66 are opened with a molded product 63 (see Fig. 10) left on the movable die 14, and the molded product 63 is ejected down by an ejector device.

To this end, a sprue lock pin 17 and an ejector pin 18 are provided. The sprue lock pin 17 is mounted in an opposed relation to the sprue 13a for retaining the molded product during opening of the dies to leave it on the movable die 14. The ejector pin 18 is disposed with its tip end facing the cavity 71, the runner 13b and the like, for ejecting down the molded product from the movable die 14 after opening of the dies.

Head portions formed respectively at rear ends of the sprue lock pin 17 and the ejector pin 18 are clamped and fixed by ejector plates 21 and 22. A rod 23 is movable into abutment against the ejector plates 21 and 22, and as the rod 23 is advanced, the sprue lock pin 17 and the ejector pin 18 are advanced.

For applying a processing to the molded product during the pressure maintaining step, a pressurizing pin 73 is provided within the stationary die 66 and disposed with its tip end facing a molded product processing section, e.g., a perforating section 71a.

The cavity 71 has a dummy portion 71b provided therein at a location corresponding to the molded produce perforating section 71a. The dummy portion 71b is defined in the movable die 14 into a shape corresponding to that of the pressurizing pin 73, and comprised of a recess having a diameter larger than than that of the pressurizing pin 73 by about 0.01 to 0.1 mm.

An ejector pin 74 is disposed with its tip end facing the dummy portion 71b to extend rearwardly (i.e., toward the die-clamping device) through the movable die 14. A head portion formed at a rear end of the ejector pin 74 is clamped and fixed by the ejector plates 21 and 22. The ejector pin 74 is pushed during opening of the dies to eject down the resin piece 62 solidified within the dummy portion 71b.

The pressurizing pin 73 is advanced and retreated by two pressurizing cylinders 75 (only one is shown in Figs. 12 and 13) defined in the stationary die 66, and the pressurizing pin 73 constitutes a pressurizing rod of the pressurizing cylinder 75. Thus, the pressurizing pin 73 can be pushed out by operation of the pressurizing cylinder 75.

For this purpose, a proportional reduction valve 44 and a directional control valve 45 are provided, so that a pulse-like hydraulic pressure can be supplied to an oil chamber 75a in the pressurizing cylinder 75 by electrically controlling an oil discharged from the pump 46 by the proportional reduction valve 44 and the directional control valve 45. The pulse-like hydraulic pressure causes the pressurizing pin 73 to be gradually advanced while being vibrated to vibrate the resin present at a processing section for the molded product 63, thereby applying a predetermined processing to the molded product 63. It should be noted that the oil chamber 75b in the pressurizing cylinder 75 serves to retreat the pressurizing pin 73 to its initial position. In addition, the range of movement of the pressurizing pin 73 is restrained by a support member which is not shown, so that the pressurizing pin 73 cannot be moved through a distance equal to or more than the thickness of the cavity 71.

Since the dummy portion 71b having the shape corresponding to that of the pressurizing pin 73 is defined in the perforating portion 71a of the cavity 71, the pressurizing pin 73 is capable of pushing the resin to the mechanical limit position in the dummy portion 71b. At this time, a hole having the same shape as the profile of the pressurizing pin 73. Moreover, because the pressurizing pin 73 pushes the resin within the dummy portion 71b to the mechanical limit position, the resin present at the processing section can be vibrated sufficiently, thereby providing a processed surface of a high accuracy.

Each of the proportional reduction valve 44 and the directional control valve 45 is of a construction such that the hydraulic pressure is supplied only in a direction of advancement of the pressurizing pin 73. Therefore, in order to vibrate the resin, it is necessary to retreat the pressurizing pin 73. To this end, a return spring 76 having a high responsiveness is provided over the pressurizing pin 73.

The pressurizing pin 73 is advanced and retreated by the two pressurizing cylinders 75 (only one is shown in Figs. 12 and 13) defined in the stationary die 66 in this embodiment, but the pressurizing cylinders 75 may be disposed outside the stationary die 66, so that the pressurizing rods can be moved through the stationary die 66.

### INDUSTRIAL APPLICABILITY

It is possible to utilize the locally pressurizing type injection molding machine for applying various processings to a molded product by locally pressurizing a resin within the dies.

## Claims

1. A locally pressurizing type injection molding machine comprising
(a) a stationary die (12),
(b) a movable die (14) disposed for movement into and out of contact with said stationary die (12) to define a cavity (16) therebetween,
(c) a pressurizing pin (24) disposed to extend through at least a portion of one of said stationary and movable dies (12, 14) with its tip end advanceably and retreatably facing at least one of the cavity (16) and a gate (25) in correspondence to a molded product working or processing section, and
(d) a pressurizing cylinder (32) disposed rearwardly of said pressurizing pin (24) for advancing said pressurizing pin (24) with supplying of a hydraulic pressure,
**characterized in that**
said locally pressurizing type injection molding machine further comprises:
(e) a return spring (30) for biasing said pressurizing pin (24) in a direction to retreat said pressurizing pin (24),
(f) a hydraulic pressure supply means for supplying a pulse-like hydraulic pressure to said pressurizing cylinder (32) and gradually increasing said pressure.

2. A locally pressurizing type injection molding machine according to claim 1, wherein said cavity (16) includes a dummy portion which is separated from a molded product portion by advancement of said pressurizing pin (24).

## Patentansprüche

1. Spritzgußmaschine mit lokaler Druckerzeugung, die aufweist
(a) einen stationären Stempel (12)
(b) einen beweglichen Stempel (14), der mit dem stationären Stempel (12) kontaktieren und dekontaktieren kann, um dazwischen einen Hohlraum (16) zu definieren;
(c) einen druckerzeugenden Stift (24), der so angeordnet ist, daß er sich durch mindestens einen Abschnitt des stationären und/oder beweglichen Stempels (12, 14) erstreckt, wobei sein vorderes Ende vorwärts und rückwärts bewegbar zumindest den Hohlraum (16) und/oder einen Eingußkanal (25) in Übereinstimmung mit einem Bearbeitungs- oder Behandlungsabschnitt eines gegossenen Produktes gegenübersteht, und
(d) einen druckerzeugenden Zylinder (32), der rückwärts von dem druckerzeugenden Stift (24) zum Vorwärtsbewegen des druckerzeugenden Stiftes (24) unter Zufuhr eines hydraulischen Druckes angeordnet ist,
**dadurch gekennzeichnet**, daß
die Spritzgußmaschine mit lokaler Druckerzeugung weiterhin
aufweist: (e) eine Rückholfeder (30) zum Vorbelasten des druckerzeugenden Stiftes (24) in eine Richtung, um den druckerzeugenden Stift (24) zurückzuziehen,
(f) ein Versorgungsmittel eines hydraulischen Druckes zum Zuführen eines pulsartigen hydraulischen Druckes an den druckerzeugenden Zylinder (32) und zum allmählichen Erhöhen des Druckes.

2. Spritzgußmaschine mit lokaler Druckerzeugung nach Anspruch 1, in der der Hohlraum (16) einen Blindabschnitt aufweist, der von dem gegossenen Produktabschnitt durch das Vorwärtsbewegen des druckerzeugenden Stiftes (24) separiert wird.

## Revendications

1. Machine de moulage par injection du type à surpression localisée, comprenant:
(a) un moule fixe (12),
(b) un moule mobile (14) disposé de manière à se déplacer pour venir en contact ou à cesser d'être en contact avec ledit moule fixe (12) afin de définir une cavité (16) entre ces moules,
(c) une tige de surpression (24) disposée de manière à s'étendre à travers au moins une partie d'un desdits moules fixe et mobile (12, 14), son extrémité libre faisant face, en vue d'un avancement et d'un recul, à la cavité (16) et/ou à un canal de coulée (25) en correspondance avec une section de façonnage ou de traitement de produit moulé, et
(d) un vérin de surpression (32) disposé en arrière de ladite tige de surpression (24) pour avancer ladite tige de surpression (24) grâce à la fourniture d'une pression hydraulique,
caractérisé en ce que ladite machine de moulage par injection du type à surpression localisée comprend, en outre:
(e) un ressort de rappel (30) destiné à solliciter ladite tige de surpression (24) dans une direction pour reculer ladite tige de surpression (24),
(f) un moyen de fourniture de pression hydraulique pour envoyer une pression hydraulique pulsée audit vérin de surpression (32) et augmenter progressivement ladite pression.

2. Machine de moulage par injection du type à surpression localisée selon la revendication 1, dans laquelle ladite cavité (16) comprend une fausse partie que l'on sépare d'une partie du produit moulé par avancement de ladite tige de surpression (24).
